# EUROPÄISCHE PATENTSCHRIFT

(11) **EP 2 962 911 B1**
(45) Veröffentlichungstag und Bekanntmachung des Hinweises auf die Patenterteilung: **11.01.2023**
(21) Anmeldenummer: 14175339.2
(22) Anmeldetag: 02.07.2014
(51) Int. Cl.: B60S 1/38, B60S 1/52

(54) **WISCHARMVORRICHTUNG**
WIPER ARM DEVICE
DISPOSITIF DE BALAI D'ESSUIE-GLACE

(43) Veröffentlichungstag der Anmeldung: 06.01.2016
(73) Patentinhaber: Robert Bosch GmbH, 70442 Stuttgart (DE)
(72) Erfinder: Kruse, Michael, 76547 Sinzheim (DE)

(56) Entgegenhaltungen:
- EP-A1- 0 860 336
- EP-A1- 2 368 776
- FR-A1- 2 742 115
- FR-A1- 2 989 655
- US-A- 5 245 720
- US-A1- 2008 155 776

## Beschreibung

### Stand der Technik

Es ist bereits eine Wischarmvorrichtung mit zumindest einer Kopplungseinheit zur Verbindung mit einem Wischarm, insbesondere mit einem Wischarmadapter des Wischarms, und mit zumindest einer Wischdüseneinheit, die zumindest einen Wischdüsengrundkörper aufweist, mit zumindest einem ersten Wischdüsenelement, das wenigstens eine erste Austrittsöffnung aufweist, und mit zumindest einem zweiten Wischdüsenelement, das wenigstens eine zweite Austrittsöffnung aufweist, vorgeschlagen worden. Weiterer Stand der Technik ist aus der US 5 245 720 A1 bekannt.

Des Weiteren ist aus der US 2008/0155766 A1 ein System mit einem Wischarm, der einen Wischarmadapter aufweist, und eine Wischarmvorrichtung bekannt, die zumindest eine Wischdüseneinheit und zumindest eine Kopplungseinheit zur Verbindung mit dem Wischarm durch mindestens ein erstes Kopplungsmittel aufweist, wobei die Kopplungseinheit zu einer Verbindung der Wischarmvorrichtung mit dem Wischarmadapter des Wischarms vorgesehen ist, wobei die Wischdüseneinheit zumindest einen, auf einer Grundplatte angeordneten Wischdüsengrundkörper, zumindest ein erstes Wischdüsenelement, das wenigstens eine erste Austrittsöffnung aufweist, und zumindest ein zweites Wischdüsenelement umfasst, das wenigstens eine zweite Austrittsöffnung aufweist, wobei ein Abstand zwischen der wenigstens einen ersten Austrittsöffnung und einem Schwerpunkt des Wischdüsengrundkörpers wesentlich kleiner ist als ein Abstand zwischen der wenigstens einen zweiten Austrittsöffnung und dem Schwerpunkt des Wischdüsengrundkörpers, wobei ein Ventil vorgesehen ist, das ein Zurückfließen von Wischflüssigkeit verhindert. Zudem sind bereits aus der FR 2 989 655 A1, der EP 2 368 776 A1, der EP 0 860 336 A1, der FR 2 742 115 A1 und der US 5 245 720 A Systeme mit einem Wischarm und mit einer Wischdüseneinheit bekannt.

### Offenbarung der Erfindung

Die Erfindung geht aus von einem_System mit einem Wischarm, der einen Wischarmadapter aufweist, und mit einer Wischarmvorrichtung, die zumindest eine Wischdüseneinheit und zumindest eine Kopplungseinheit zur Verbindung mit dem Wischarm durch mindestens ein erstes Kopplungsmittel aufweist, wobei die Kopplungseinheit zu einer Verbindung der Wischarmvorrichtung mit dem Wischarmadapter des Wischarms vorgesehen ist, wobei die Wischdüseneinheit zumindest einen, auf einer Grundplatte angeordneten Wischdüsengrundkörper, zumindest ein erstes Wischdüsenelement, das wenigstens eine erste Austrittsöffnung aufweist, und zumindest ein zweites Wischdüsenelement umfasst, das wenigstens eine zweite Austrittsöffnung aufweist, wobei ein Abstand zwischen der wenigstens einen ersten Austrittsöffnung und einem Schwerpunkt des Wischdüsengrundkörpers wesentlich kleiner ist als ein Abstand zwischen der wenigstens einen zweiten Austrittsöffnung und dem Schwerpunkt des Wischdüsengrundkörpers.

Es wird vorgeschlagen, dass der Wischdüsengrundkörper eine Grundeinheit aufweist, die von einem zylindrischen Bauteil gebildet ist, wobei in einem montierten Zustand der Wischarmvorrichtung die Grundeinheit auf einer der Seitenfläche des Wischarmadapters abgewandten Seite der Grundplatte senkrecht aus der Grundplatte ragt, wobei der Schwerpunkt des Wischdüsengrundkörpers annähernd in einem geometrischen Mittelpunkt der Grundeinheit angeordnet ist, wobei die Wischdüsenelemente der Wischdüseneinheit jeweils an einer Mantelfläche der zylindrischen Grundeinheit aus der Grundeinheit ragen. Unter einer "Kopplungseinheit" soll in diesem Zusammenhang insbesondere eine Einheit verstanden werden, die zu einer Herstellung einer Verbindung, insbesondere einer zerstörungsfrei lösbaren Verbindung, vorgesehen ist. Vorzugsweise soll darunter eine Einheit verstanden werden, die dazu vorgesehen ist, zumindest die Wischarmvorrichtung form-, kraft- und/oder stoffschlüssig mit dem Wischarm, insbesondere mit dem Wischarmadapter des Wischarms zu verbinden. Besonders bevorzugt soll darunter eine Einheit verstanden werden, die zur Herstellung einer zerstörungsfrei lösbaren Verbindung vorgesehen ist, wobei die Verbindung dabei insbesondere werkzeuglos herstellbar ist. Ferner soll in diesem Zusammenhang unter einem "Wischarmadapter" insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter bereitzustellen. Dabei soll unter einem "Wischblattadapter" insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Des Weiteren soll in diesem Zusammenhang unter einer "Wischdüseneinheit" insbesondere eine Einheit verstanden werden, die dazu vorgesehen ist, Flüssigkeit, insbesondere eine Wischflüssigkeit, zur Reinigung einer Scheibe aufzubringen. Vorzugsweise ist die Einheit dazu vorgesehen, zur Reinigung einer Scheibe die Flüssigkeit über zumindest ein Wischdüsenelement aufzubringen. Unter einem "Wischdüsengrundkörper" soll in diesem Zusammenhang insbesondere ein Teil der Wischdüseneinheit verstanden werden, der zumindest einen wesentlichen Teil der Wischdüseneinheit bildet. Vorzugsweise soll darunter insbesondere ein Teil der Wischdüseneinheit verstanden werden, der zumindest einen Großteil der weiteren Teile, insbesondere Bauteile, der Wischdüseneinheit verbindet. Dabei soll unter einem "wesentlichen Teil der Wischdüseneinheit" insbesondere zumindest 30%, vorzugsweise zumindest 50% und besonders bevorzugt zumindest 70% eines Volumens der Wischdüseneinheit verstanden werden. Ferner soll dabei unter "zumindest einem Großteil" insbesondere zumindest 50%, vorzugsweise zumindest 60% und besonders bevorzugt zumindest 70% eines Gesamten verstanden werden. Ferner soll in diesem Zusammenhang unter einem "Wischdüsenelement" insbesondere ein Element verstanden werden, das dazu vorgesehen ist, eine Flüssigkeit, insbesondere Wischflüssigkeit zur Reinigung einer Scheibe, insbesondere einer Kraftfahrzeugscheibe, in eine bestimmte Richtung entlang eines Austrittsvektors zu sprühen. Vorzugsweise soll darunter ein Element verstanden werden, das insbesondere direkt und/oder indirekt mit einem Wischwasserschlauch und/oder mit einer Wischwasserpumpe verbunden ist. Des Weiteren soll unter einer "Austrittsöffnung" in diesem Zusammenhang insbesondere Öffnung des Wischdüsenelements verstanden werden, an der Wischflüssigkeit während eines Betriebs in eine Umgebung austritt. Vorzugsweise soll darunter eine Öffnung verstanden werden, an der Wischflüssigkeit während eines Betriebs aus einem von dem Wischdüsenelement begrenzten Raum in einen von dem Wischdüsenelement unbegrenzten Raum übergeht. Unter einem "wesentlich kleineren Abstand" soll in diesem Zusammenhang insbesondere verstanden werden, dass ein Abstandswert eines kleineren Abstands maximal 70%, vorzugsweise maximal 50% und besonders bevorzugt maximal 30% eines Abstandswerts des größeren Abstands beträgt. Ferner soll unter "vorgesehen" insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Wischarmvorrichtung kann eine besonders vorteilhafte Wischflüssigkeitsverteilung erreicht werden. Durch die differierenden Abstände kann insbesondere eine besonders vorteilhaft effiziente Reinigung erreicht werden.

Ferner wird vorgeschlagen, dass die zumindest eine Kopplungseinheit zumindest ein Kopplungsmittel, zur Verbindung mit zumindest einem Befestigungselement des Wischarmadapters des Wischarms, aufweist. Vorzugsweise ist das Befestigungselement des Wischarmadapters des Wischarms von einer Lasche gebildet. Bevorzugt ist das Kopplungsmittel zur Verbindung mit zumindest einer Lasche des Wischarmadapters des Wischarms vorgesehen. Unter einem "Kopplungsmittel" soll in diesem Zusammenhang insbesondere ein Mittel der Kopplungseinheit zur direkten Herstellung einer Verbindung verstanden werden, das bei einer Montage zu einer direkten Kontaktierung mit dem zumindest einen Befestigungselement vorgesehen ist. Besonders bevorzugt weist das Kopplungsmittel zumindest ein Rastmittel auf und/oder ist von einem Rastmittel gebildet. Dabei soll unter einem "Rastmittel" insbesondere ein federelastisches Mittel zur Herstellung einer Rastverbindung verstanden werden, das dazu vorgesehen ist, bei einer Montage elastisch ausgelenkt zu werden. Dadurch kann eine besonders vorteilhafte Verbindung zwischen der Wischarmvorrichtung und dem Wischarm bereitgestellt werden. Des Weiteren wird vorgeschlagen, dass die wenigstens eine zweite Austrittsöffnung in einer Umgebung des zumindest einen Kopplungsmittels angeordnet ist. Darunter, dass "die wenigstens eine zweite Austrittsöffnung in einer Umgebung des zumindest einen Kopplungsmittels angeordnet ist" soll in diesem Zusammenhang insbesondere verstanden werden, dass die wenigstens eine zweite Austrittsöffnung in einem Bereich angeordnet ist, der sich vorzugsweise blasenförmig um und über das zumindest eine Kopplungsmittel erstreckt. Insbesondere soll darunter verstanden werden, dass die wenigstens eine zweite Austrittsöffnung in einem vorzugsweise kugelförmigen Bereich angeordnet ist, dessen Mittelpunkt in einem Schwerpunkt des zumindest einen Kopplungsmittels liegt. Bevorzugt weist der vorzugsweise kugelförmige Bereich einen Durchmesser von maximal 5 cm, vorzugsweise von maximal 3 cm und besonders bevorzugt von maximal 1 cm auf. Dadurch kann eine vorteilhafte Anordnung der Austrittsöffnung erreicht werden. Vorzugsweise kann dadurch insbesondere ein Vorbeispritzen von Wischflüssigkeit aus der zumindest einen zweiten Austrittsöffnung an dem zumindest einen Kopplungsmittel und/oder an dem zumindest einen Befestigungselement des Wischarmadapters des Wischarms gewährleistet werden. Dadurch kann wiederum insbesondere ein gezieltes Aufbringen von Wischflüssigkeit, besonders bevorzugt ohne Verlust, erreicht werden.

Es wird ferner vorgeschlagen, dass das zumindest eine zweite Wischdüsenelement zumindest einen länglichen Führungskanal aufweist, der dazu vorgesehen ist, Wischflüssigkeit von einer Grundeinheit des Wischdüsengrundkörpers zu der wenigstens einen zweiten Austrittsöffnung zu führen. Unter einem "länglichen Führungskanal" soll in diesem Zusammenhang insbesondere ein Führungskanal verstanden werden, dessen Erstreckung parallel zu einer Durchflussrichtung um ein vielfaches größer ist, als eine Erstreckung quer zu einer Durchflussrichtung. Darunter soll vorzugsweise verstanden werden, dass eine Erstreckung parallel zu einer Durchflussrichtung zumindest 2 mal, vorzugsweise 3 mal und besonders bevorzugt 5 mal länger bzw. größer ist als eine Erstreckung quer zu einer Durchflussrichtung. Dabei soll unter einem "Führungskanal" insbesondere ein Kanal und/oder eine Leitung verstanden werden, die zumindest in einem Betrieb dazu vorgesehen ist, Wischflüssigkeit zu führen und insbesondere in Richtung eines Zielorts, wie insbesondere in Richtung einer Düse, zu leiten. Dadurch kann vorteilhaft eine besonders platzsparende Wischdüseneinheit bereitgestellt werden. Ferner kann dadurch insbesondere vorteilhaft eine Wischflüssigkeitsführung erreicht werden. Es wird weiter vorgeschlagen, dass der zumindest eine Führungskanal von einem Rohr gebildet ist. Dadurch kann insbesondere eine besonders vorteilhafte Wischflüssigkeitsführung erreicht werden. Vorzugsweise kann dadurch insbesondere ein Standardbauteil für den Führungskanal verwendet werden.

Ferner wird vorgeschlagen, dass der zumindest eine Führungskanal zumindest teilweise aus Aluminium besteht. Unter "zumindest teilweise" soll in diesem Zusammenhang insbesondere zumindest zu 30%, vorzugsweise zumindest zu 50% und besonders bevorzugt zumindest zu 80% eines Gesamten verstanden werden. Dadurch kann insbesondere eine besonders vorteilhafte Wärmeleitfähigkeit des Führungskanals erreicht werden. Dadurch kann wiederum insbesondere eine vorteilhafte Heizwirkung des Führungskanals erreicht werden, wodurch ein Gefrieren von Wischflüssigkeit in dem Führungskanal verhindert werden kann.

Des Weiteren wird vorgeschlagen, dass das zumindest eine erste Wischdüsenelement zumindest teilweise von einer Kugeldüse gebildet ist. Unter einer "Kugeldüse" soll in diesem Zusammenhang insbesondere eine Düse mit zumindest einem zumindest im Wesentlichen kugelförmigen Bauteil verstanden werden. Vorzugsweise soll darunter insbesondere eine Düse verstanden werden, die zumindest einen zumindest im Wesentlichen kugelförmigen Düsenkopf aufweist. Bevorzugt weist der zumindest im Wesentlichen kugelförmige Düsenkopf eine zentrale Öffnung auf, die als Austrittsöffnung dient. Besonders bevorzugt soll darunter eine Düse mit einem zumindest im Wesentlichen kugelförmigen Düsenkopf verstanden werden, wobei der zumindest im Wesentlichen kugelförmige Düsenkopf in einer Aufnahme gehalten ist, in der der zumindest im Wesentlichen kugelförmige Düsenkopf ohne herauszufallen derart verstellt werden kann, dass ein Austrittsvektor der Düse in einem Bereich variabel verändert werden kann. Unter einem "Austrittsvektor" soll in diesem Zusammenhang insbesondere ein Vektor verstanden werden, der eine Richtung definiert, in welcher Flüssigkeit, insbesondere Wischflüssigkeit, bei einem Sprühvorgang aus dem zumindest einen Wischdüsenelement zumindest im Wesentlichen austritt. Vorzugsweise tritt die Flüssigkeit in Form eines Strahls aus, wobei der Strahl an einer Austrittsöffnung eine Bewegungsrichtung aufweist, die dem Austrittsvektor entspricht. Der Strahl besteht dabei insbesondere aus einer Anhäufung von frei in der Luft fliegenden Flüssigkeitsmolekülen, wobei unter "frei" insbesondere materiell ungeführt verstanden werden soll. Die Flüssigkeitsmoleküle können dabei eine von dem Austrittsvektor differierende Bewegungsrichtung aufweisen, wobei die Bewegungsrichtung aller Flüssigkeitsmoleküle an der Austrittsöffnung gemittelt einer Richtung des Austrittsvektors entspricht. Dadurch kann ein besonders vorteilhaftes Wischdüsenelement bereitgestellt werden. Insbesondere kann dadurch ein einfaches Verstellen eines Austrittsvektors bzw. einer Austrittsrichtung erreicht werden.

Es wird ferner vorgeschlagen, dass der zumindest eine Wischdüsengrundkörper zumindest ein Ventil aufweist, über welches in einem Betrieb eine Wischflüssigkeitsversorgung des zumindest einen ersten Wischdüsenelement und des zumindest einen zweiten Wischdüsenelement erfolgt. Unter einem "Ventil" soll in diesem Zusammenhang insbesondere ein Bauteil und/oder eine Baugruppe verstanden werden, das/die zu einer Steuerung und/oder einer Regelung eines Durchflusses von Fluiden, insbesondere von Flüssigkeiten, besonders bevorzugt von Wischflüssigkeit, vorgesehen ist. Besonders bevorzugt soll darunter ein Bauteil und/oder eine Baugruppe verstanden werden, das/die dazu vorgesehen ist, eine Durchflussmenge, eine Durchflussrichtung und/oder einen allgemeinen Durchfluss zu steuern und/oder zu regeln. Dadurch kann eine besonders vorteilhafte und schnelle Steuerung der Wischdüseneinheit erreicht werden. Insbesondere kann dadurch eine vorteilhaft nahe Positionierung eines Ventils an den Wischdüsenelementen erreicht werden, wodurch insbesondere eine schnelle Reaktionszeit erreicht werden kann.

Es wird weiter vorgeschlagen, dass das zumindest eine Ventil des zumindest einen Wischdüsengrundkörpers von einem Membranventil gebildet ist. Unter einem "Membranventil" soll in diesem Zusammenhang insbesondere ein Ventil verstanden werden, das zumindest ein membranartiges Element umfasst. Vorzugsweise soll darunter ein Ventil verstanden werden, bei welchem durch Veränderung eines Steuerdrucks eine Auslenkung des zumindest einen membranartigen Elements verändert werden kann. Besonders bevorzugt soll darunter ein Ventil verstanden werden, bei welchem durch eine Veränderung einer Auslenkung des zumindest einen membranartigen Elements indirekt über einen Schaltschieber verschiedene Schaltstellungen realisiert werden können. Grundsätzlich wäre jedoch auch denkbar, dass das zumindest eine membranartige Bauteil direkt verschiedene Schaltstellungen realisiert, wie beispielsweise durch ein Abdecken und Freigeben einer Öffnung. Durch eine Ausbildung als Membranventil kann ein besonders einfaches und leicht zu steuerndes Ventil bereitgestellt werden.

Ferner wird vorgeschlagen, dass die wenigstens eine erste Austrittsöffnung einen Austrittsvektor aufweist, der wesentlich different ist zu einem Austrittsvektor der wenigstens einen zweiten Austrittsöffnung. Unter "wesentlich different" soll in diesem Zusammenhang insbesondere verstanden werden, dass die Austrittsvektoren, bei einem theoretischen Aufeinanderlegen der Startpunkte unter Beibehaltung einer Richtung der Austrittsvektoren, einen kleinsten Winkel zwischen sich einschließen, der zumindest 45°, vorzugsweise zumindest 90° und besonders bevorzugt zumindest 120° beträgt. Dadurch kann eine besonders vorteilhafte Wischflüssigkeitsverteilung erreicht werden. Insbesondere kann dadurch ein gleichzeitiges Auftragen von Wischflüssigkeit auf verschiedene Bereiche erreicht werden.

Die erfindungsgemäße Wischarmvorrichtung soll hierbei nicht auf die oben beschriebene Anwendung und Ausführungsform beschränkt sein. Insbesondere kann die erfindungsgemäße Wischarmvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischarmvorrichtung, einen Wischarm und einen Teilausschnitt eines Wischblatts in einer schematischen Darstellung,

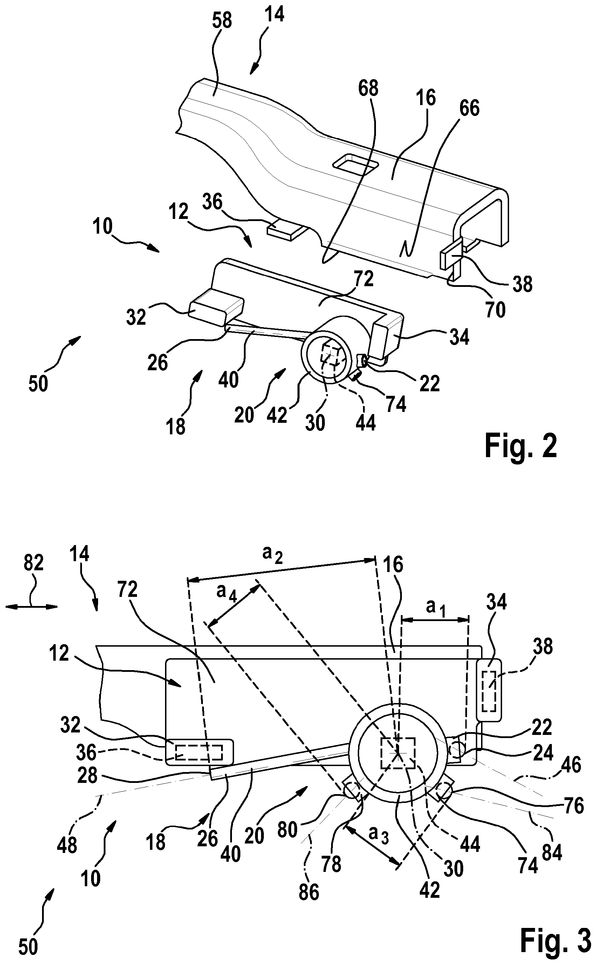

- Fig. 2: die erfindungsgemäße Wischarmvorrichtung mit einer Wischdüseneinheit und mit einer Kopplungseinheit und einen Teilausschnitt des Wischarms in einer schematischen Explosionsdarstellung und
- Fig. 3: die erfindungsgemäße Wischarmvorrichtung mit der Wischdüseneinheit und mit der Kopplungseinheit und einen Teilausschnitt des Wischarms in einer schematischen Darstellung in einer Seitenansicht.

### Beschreibung des Ausführungsbeispiels

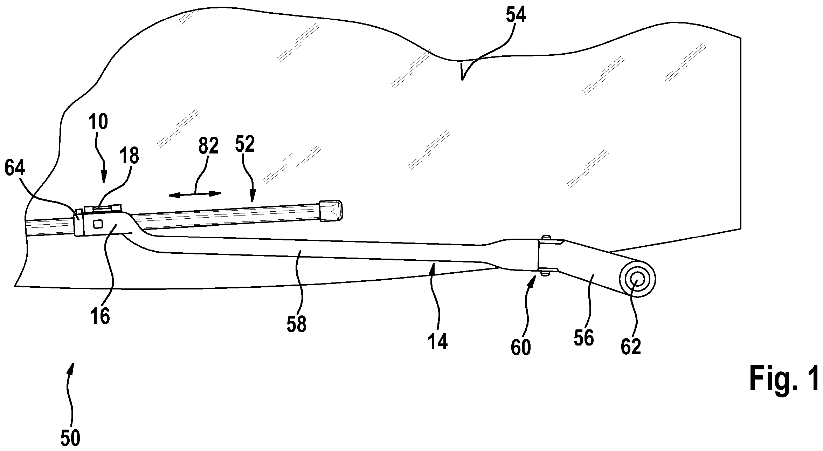

Figur 1 zeigt eine erfindungsgemäße Wischarmvorrichtung 10, einen Wischarm 14 und ein Wischblatt 52. Ferner zeigt Figur 1 eine zu waschende Oberfläche 54 eines nicht weiter sichtbaren Kraftfahrzeugs. Die zu waschende Oberfläche 54 ist von einer Scheibe gebildet. Die zu waschende Oberfläche 54 ist von einer Kraftfahrzeugscheibe gebildet.

Der Wischarm 14 weist zwei Wischarmsegmente 56, 58, einen Wischarmadapter 16 und ein Scharnier 60 auf. Die Wischarmsegmente 56, 58 sind über das Scharnier 60 verbunden. Ferner ist im Bereich des Scharniers 60 ein nicht weiter sichtbares Federelement angeordnet. Das nicht weiter sichtbare Federelement ist dazu vorgesehen, in einem Andrückbereich des zweiten Wischarmsegments 58, das zweite Wischarmsegment 58 in Richtung der zu waschenden Oberfläche 54 zu drücken. Das erste Wischarmsegment 56 ist über eine Achse 62 mit dem nicht weiter sichtbaren Kraftfahrzeug verbunden. Die Achse 62 ist an einem dem zweiten Wischarmsegment 58 abgewandten äußeren Ende des Wischarms 14 mit dem ersten Wischarmsegment 56 verbunden. Die Achse 62 wird über einen nicht weiter sichtbaren Antriebsmotor angetrieben. An einem dem Scharnier 60 abgewandten Ende des zweiten Wischarmsegments 58 ist der Wischarmadapter 16 angeordnet. Der Wischarmadapter 16 ist einstückig mit dem zweiten Wischarmsegment 58 ausgebildet. Der Wischarmadapter 16 ist zur Aufnahme eines Wischblattadapters 64 des Wischblatts 52 vorgesehen. Der Wischarmadapter 16 nimmt den Wischblattadapter 64 auf.

Die Wischarmvorrichtung 10 weist eine Kopplungseinheit 12 auf. Die Kopplungseinheit 12 ist zu einer Verbindung der Wischarmvorrichtung 10 mit dem Wischarm 14 vorgesehen. Die Kopplungseinheit 12 ist zu einer Verbindung der Wischarmvorrichtung 10 mit dem Wischarmadapter 16 des Wischarms 14 vorgesehen. Die Kopplungseinheit 12 weist ein erstes Kopplungsmittel 32 zur Verbindung mit einem ersten Befestigungselement 36 des Wischarmadapters 16 des Wischarms 14 auf. Ferner weist die Kopplungseinheit 12 ein zweites Kopplungsmittel 34 zur Verbindung mit einem zweiten Befestigungselement 38 des Wischarmadapters 16 des Wischarms 14 auf. Das erste Befestigungselement 36 und das zweite Befestigungselement 38 sind jeweils von einer Lasche gebildet. Das erste Befestigungselement 36 und das zweite Befestigungselement 38 sind jeweils von rechteckigen Fortsätzen gebildet, die jeweils senkrecht zu einer Seitenfläche 66 des Wischarmadapters 16 abstehen. Das erste Befestigungselement 36 steht an einer Unterkante 68 der Seitenfläche 66 des Wischarmadapters 16 von der Seitenfläche 66 ab. Das zweite Befestigungselement 38 steht an einer von dem zweiten Wischarmsegment 58 abgewandten Kante 70 der Seitenfläche 66 des Wischarmadapters 16 von der Seitenfläche 66 ab. Das erste Kopplungsmittel 32 und das zweite Kopplungsmittel 34 weisen jeweils einen nicht weiter sichtbaren Aufnahmebereich auf, der dazu vorgesehen ist, das jeweils zugeordnete Befestigungselement 36, 38 in einem montierten Zustand aufzunehmen. Das erste Kopplungsmittel 32 und das zweite Kopplungsmittel 34 umschließen jeweils das jeweils zugeordnete Befestigungselement 36, 38 in einem montierten Zustand. Das erste Kopplungsmittel 32 und das zweite Kopplungsmittel 34 sind in einem montierten Zustand jeweils über eine nicht weiter sichtbare Rastverbindung mit dem jeweils zugeordneten Befestigungselement 36, 38 verbunden. In den nicht weiter sichtbaren Aufnahmebereichen des ersten Kopplungsmittels 32 und des zweiten Kopplungsmittels 34 verrasten das erste Befestigungselement 36 und das zweite Befestigungselement 38 jeweils mit dem jeweils zugeordneten Kopplungsmittel 32, 34.

Das erste Kopplungsmittel 32 und das zweite Kopplungsmittel 34 der Kopplungseinheit 12 sind über eine Grundplatte 72 der Wischarmvorrichtung 10 verbunden. Das erste Kopplungsmittel 32 und das zweite Kopplungsmittel 34 sind jeweils an gegenüberliegenden Ecken der Grundplatte 72 der Wischarmvorrichtung 10 angeordnet. In einem montierten Zustand ragen das erste Kopplungsmittel 32 und das zweite Kopplungsmittel 34 auf einer der Seitenfläche 66 des Wischarmadapters 16 abgewandten Seite der Grundplatte 72 senkrecht aus der Grundplatte 72. Die nicht weiter sichtbaren Aufnahmebereiche der Kopplungsmittel 32, 34 sind dagegen auf einer der Seitenfläche 66 des Wischarmadapters 16 zugewandten Seite der Grundplatte 72 geöffnet. Die Wischarmvorrichtung 10 weist die Grundplatte 72 auf. Die Grundplatte 72 ist von einer rechteckigen, ebenen Platte gebildet. Grundsätzlich wäre jedoch auch eine vollkommen andere, dem Fachmann als sinnvoll erscheinende Ausgestaltung der Grundplatte 72 denkbar.

Ferner weist die Wischarmvorrichtung 10 eine Wischdüseneinheit 18 auf. Die Wischdüseneinheit 18 weist einen Wischdüsengrundkörper 20 auf. Der Wischdüsengrundkörper 20 ist auf der Grundplatte 72 der Wischarmvorrichtung 10 angeordnet. Der Wischdüsengrundkörper 20 ist zwischen dem ersten Kopplungsmittel 32 und dem zweiten Kopplungsmittel 34 auf einer dem zweiten Kopplungsmittel 34 näher gelegenen Bereich der Grundplatte 72 angeordnet. In einem montierten Zustand ragt der Wischdüsengrundkörper 20 auf einer der Seitenfläche 66 des Wischarmadapters 16 abgewandten Seite der Grundplatte 72 aus der Grundplatte 72. Der Wischdüsengrundkörper 20 weist ein erstes Wischdüsenelement 22, mit einer ersten Austrittsöffnung 24, und ein zweites Wischdüsenelement 26, mit einer zweiten Austrittsöffnung 28, auf. Ferner weist der Wischdüsengrundkörper 20 ein drittes Wischdüsenelement 74, mit einer dritten Austrittsöffnung 76, und ein viertes Wischdüsenelement 78, mit einer vierten Austrittsöffnung 80 auf.

Ein Abstand a1 zwischen der ersten Austrittsöffnung 24 und einem Schwerpunkt 30 des Wischdüsengrundkörpers 20 ist wesentlich kleiner ist als ein Abstand a2 zwischen der zweiten Austrittsöffnung 28 und dem Schwerpunkt 30 des Wischdüsengrundkörpers 20. Die Abstände al, a3, a4 zwischen jeweils der ersten Austrittsöffnung 24, der dritten Austrittsöffnung 76 und der vierten Austrittsöffnung 80 und dem Schwerpunkt 30 des Wischdüsengrundkörpers 20 sind jeweils annähernd identisch. Die erste Austrittsöffnung 24, die dritte Austrittsöffnung 76 und die vierte Austrittsöffnung 80 sind jeweils annähernd identisch zu dem Schwerpunkt 30 des Wischdüsengrundkörpers 20 beabstandet.

Der Wischdüsengrundkörper 20 weist eine Grundeinheit 42 auf. Die Grundeinheit 42 ist von einem zylindrischen Bauteil gebildet. In einem montierten Zustand der Wischarmvorrichtung 10 ragt die Grundeinheit 42 auf einer der Seitenfläche 66 des Wischarmadapters 16 abgewandten Seite der Grundplatte 72 senkrecht aus der Grundplatte 72. Der Schwerpunkt 30 des Wischdüsengrundkörpers 20 ist annähernd in einem geometrischen Mittelpunkt der Grundeinheit 42 angeordnet. Die Wischdüsenelemente 22, 26, 74, 78 der Wischdüseneinheit 18 ragen jeweils an einer Mantelfläche der zylindrischen Grundeinheit 42 aus der Grundeinheit 42. Das erste Wischdüsenelement 22 ragt parallel zu einer Haupterstreckungsrichtung 82 der Wischarmvorrichtung 10 aus der Grundeinheit 42 des Wischdüsengrundkörpers 20. Das dritte Wischdüsenelement 74 ragt, bezogen auf eine Symmetrieachse der zylindrischen Grundeinheit 42, um annähernd 40° gegenüber dem ersten Wischdüsenelement 22 nach unten verdreht aus der Grundeinheit 42 des Wischdüsengrundkörpers 20. Das vierte Wischdüsenelement 78 ragt, bezogen auf die Symmetrieachse der zylindrischen Grundeinheit 42, um annähernd 140° gegenüber dem ersten Wischdüsenelement 22 nach unten verdreht aus der Grundeinheit 42 des Wischdüsengrundkörpers 20. Das erste Wischdüsenelement 22 ist von einer Kugeldüse gebildet. Das erste Wischdüsenelement 22 ist von einer verstellbaren Kugeldüse gebildet. Das dritte Wischdüsenelement 74 und das vierte Wischdüsenelement 78 sind ebenfalls von einer verstellbaren Kugeldüse gebildet. Das erste Wischdüsenelement 22, das dritte Wischdüsenelement 74 und das vierte Wischdüsenelement 78 sind abgesehen von einer Positionierung bzw. Orientierung identisch ausgebildet. Das zweite Wischdüsenelement 26 ragt auf einer, bezogen auf die Symmetrieachse der zylindrischen Grundeinheit 42, dem ersten Wischdüsenelement 22 gegenüberliegenden Seite der Grundeinheit 42 aus der Grundeinheit 42. Die erste Austrittsöffnung 24 weist folglich einen Austrittsvektor 46 auf, der wesentlich different ist zu einem Austrittsvektor 48 der zweiten Austrittsöffnung 28. Die Austrittsvektoren 46, 48 sind um annähernd 140° different. Die Austrittsvektoren 46, 48 schließen einen kleinsten Winkel von annähernd 140° zwischen sich ein. Der Austrittsvektor 46 des ersten Wischdüsenelements 22, ein Austrittsvektor 84 des dritten Wischdüsenelements 74 und ein Austrittsvektor 86 des vierten Wischdüsenelements 78 sind teilweise verstellbar. Grundsätzlich wäre auch denkbar, dass auch ein Austrittsvektor 48 des zweiten Wischdüsenelements 26 teilweise verstellbar ist.

Das zweite Wischdüsenelement 26 weist einen länglichen Führungskanal 40 auf, der dazu vorgesehen ist, Wischflüssigkeit von der Grundeinheit 42 des Wischdüsengrundkörpers 20 zu der zweiten Austrittsöffnung 28 zu führen. Der Führungskanal 40 des zweiten Wischdüsenelements 26 ist von der Grundeinheit 42 zu dem ersten Kopplungsmittel 32 der Kopplungseinheit 12 geführt. Der Führungskanal 40 des zweiten Wischdüsenelements 26 ist von der Grundeinheit 42 zu einer, in einem montierten Zustand, der Unterkante 68 der Seitenfläche 66 des Wischarmadapters 16 nächstliegenden Unterkante der Grundplatte 72 zugewandten Seite des ersten Kopplungsmittels 32 der Kopplungseinheit 12 geführt. Die zweite Austrittsöffnung 28 des zweiten Wischdüsenelements 26 ist dabei in einer Umgebung des ersten Kopplungsmittels 32 angeordnet. Die zweite Austrittsöffnung 28 ist in einem Endbereich des Führungskanals 40 integriert. Der Führungskanal 40 ist fest mit dem ersten Kopplungsmittel 32 verbunden. Der Führungskanal 40 erstreckt sich parallel zu einer Haupterstreckungsebene der Grundplatte 72 der Wischarmvorrichtung 10.

Der Führungskanal 40 ist von einem Rohr gebildet. Der Führungskanal 40 ist von einem geraden Rohr mit einer zylindrischen Außenfläche gebildet. Ferner besteht der Führungskanal 40 aus Aluminium. Grundsätzlich sind jedoch auch andere, dem Fachmann als sinnvoll erscheinende Formgestaltungen und/oder andere, dem Fachmann als sinnvoll erscheinende Materialausgestaltungen des Führungskanals 40 denkbar. Des Weiteren ist der Führungskanal 40 mit einer nicht weiter sichtbaren Heizeinheit verbunden. Die nicht weiter sichtbare Heizeinheit ist dazu vorgesehen, den Führungskanal 40 bei niedrigen Umgebungstemperaturen zu beheizen.

Ferner weist der Wischdüsengrundkörper 20 ein Ventil 44 auf. Über das Ventil 44 erfolgt in einem Betrieb eine Wischflüssigkeitsversorgung des ersten Wischdüsenelements 22, des zweiten Wischdüsenelements 26, des dritten Wischdüsenelements 74 und des vierten Wischdüsenelements 78. Das Ventil 44 des Wischdüsengrundkörpers 20 ist von einem Membranventil gebildet. Das Ventil 44 bildet ein Rückschlagventil um ein Zurückfließen von Wischflüssigkeit zu verhindern. Das Ventil 44 ist in der Grundeinheit 42 des Wischdüsengrundkörpers 20 angeordnet. Ferner ist das Ventil 44 mit einer nicht weiter sichtbaren Wischflüssigkeitszuleitung verbunden. Die nicht weiter sichtbare Wischflüssigkeitszuleitung ist dazu vorgesehen, die Wischarmvorrichtung 10 mit Wischflüssigkeit aus einem nicht weiter sichtbaren Speicher zu versorgen.

Der Wischarm 14, mit dem Wischarmadapter 16, und die Wischarmvorrichtung 10 bilden ein System 50.

## Patentansprüche

1. System (50) mit einem Wischarm (14), der einen Wischarmadapter (16) aufweist, und mit einer Wischarmvorrichtung (10), die zumindest eine Wischdüseneinheit (18) und zumindest eine Kopplungseinheit (12) zur Verbindung mit dem Wischarm (14) durch mindestens ein erstes Kopplungsmittel (32) aufweist, wobei die Kopplungseinheit (12) zu einer Verbindung der Wischarmvorrichtung (10) mit dem Wischarmadapter (16) des Wischarms (14) vorgesehen ist, wobei die Wischdüseneinheit (18) zumindest einen, auf einer Grundplatte (72) angeordneten Wischdüsengrundkörper (20), zumindest ein erstes Wischdüsenelement (22), das wenigstens eine erste Austrittsöffnung (24) aufweist, und zumindest ein zweites Wischdüsenelement (26) umfasst, das wenigstens eine zweite Austrittsöffnung (28) aufweist, wobei ein Abstand (al) zwischen der wenigstens einen ersten Austrittsöffnung (24) und einem Schwerpunkt (30) des Wischdüsengrundkörpers (20) wesentlich kleiner ist als ein Abstand (a2) zwischen der wenigstens einen zweiten Austrittsöffnung (28) und dem Schwerpunkt (30) des Wischdüsengrundkörpers (20), **dadurch gekennzeichnet, dass** der Wischdüsengrundkörper (20) eine Grundeinheit (42) aufweist, die von einem zylindrischen Bauteil gebildet ist, wobei in einem montierten Zustand der Wischarmvorrichtung (10) die Grundeinheit (42) auf einer der Seitenfläche (66) des Wischarmadapters (16) abgewandten Seite der Grundplatte (72) senkrecht aus der Grundplatte (72) ragt, wobei der Schwerpunkt (30) des Wischdüsengrundkörpers (20) annähernd in einem geometrischen Mittelpunkt der Grundeinheit (42) angeordnet ist, wobei die Wischdüsenelemente (22, 26, 74, 78) der Wischdüseneinheit (18) jeweils an einer Mantelfläche der zylindrischen Grundeinheit (42) aus der Grundeinheit (42) ragen.

2. System (50) nach Anspruch 1, **dadurch gekennzeichnet, dass** die zumindest eine Kopplungseinheit (12) zumindest ein Kopplungsmittel (32, 34), zur Verbindung mit zumindest einem Befestigungselement (36, 38) des Wischarmadapters (16) des Wischarms (14), aufweist.

3. System (50) nach Anspruch 2, **dadurch gekennzeichnet, dass** die wenigstens eine zweite Austrittsöffnung (28) in einer Umgebung des zumindest einen Kopplungsmittels (32) angeordnet ist.

4. System (50) nach einem der vorhergehenden Ansprüche, **dadurch gekennzeichnet, dass** das zumindest eine zweite Wischdüsenelement (26) zumindest einen länglichen Führungskanal (40) aufweist, der dazu vorgesehen ist, Wischflüssigkeit von einer Grundeinheit (42) des Wischdüsengrundkörpers (20) zu der wenigstens einen zweiten Austrittsöffnung (28) zu führen.

5. System (50) nach Anspruch 4, **dadurch gekennzeichnet, dass** der zumindest eine Führungskanal (40) von einem Rohr gebildet ist.

6. System (50) nach einem der Ansprüche 4 oder 5, **dadurch gekennzeichnet, dass** der zumindest eine Führungskanal (40) zumindest teilweise aus Aluminium besteht.

7. System (50) nach einem der vorhergehenden Ansprüche, **dadurch gekennzeichnet, dass** das zumindest eine erste Wischdüsenelement (22) zumindest teilweise von einer Kugeldüse gebildet ist.

8. System (50) nach einem der vorhergehenden Ansprüche, **dadurch gekennzeichnet, dass** der zumindest eine Wischdüsengrundkörper (20) zumindest ein Ventil (44) aufweist, über welches in einem Betrieb eine Wischflüssigkeitsversorgung des zumindest einen ersten Wischdüsenelements (22) und des zumindest einen zweiten Wischdüsenelements (26) erfolgt.

9. System (50) nach Anspruch 8, **dadurch gekennzeichnet, dass** das zumindest eine Ventil (44) des zumindest einen Wischdüsengrundkörpers (20) von einem Membranventil gebildet ist.

10. System (50) nach einem der vorhergehenden Ansprüche, **dadurch gekennzeichnet, dass** die wenigstens eine erste Austrittsöffnung (24) einen Austrittsvektor (46) aufweist, der wesentlich different ist zu einem Austrittsvektor (48) der wenigstens einen zweiten Austrittsöffnung (28).

## Claims

1. System (50) having a wiper arm (14), which has a wiper arm adapter (16), and having a wiper arm device (10), which has at least one wiper nozzle unit (18) and at least one coupling unit (12) for connection to the wiper arm (14) by at least one first coupling means (32), wherein the coupling unit (12) is provided for connecting the wiper arm device (10) to the wiper arm adapter (16) of the wiper arm (14), wherein the wiper nozzle unit (18) comprises at least one wiper nozzle basic body (20) arranged on a base plate (72), at least one first wiper nozzle element (22), which has at least one first outlet opening (24), and at least one second wiper nozzle element (26), which has at least one second outlet opening (28), wherein a distance (al) between the at least one first outlet opening (24) and a centre of gravity (30) of the wiper nozzle basic body (20) is substantially smaller than a distance (a2) between the at least one second outlet opening (28) and the centre of gravity (30) of the wiper nozzle basic body (20), **characterized in that** the wiper nozzle basic body (20) has a basic unit (42) which is formed by a cylindrical component, wherein, in a mounted state of the wiper arm device (10), the basic unit (42) protrudes perpendicularly from the base plate (72) on a side of the base plate (72) which faces away from the side surface (66) of the wiper arm adapter (16), wherein the centre of gravity (30) of the wiper nozzle basic body (20) is arranged approximately in a geometrical centre point of the basic unit (42), wherein the wiper nozzle elements (22, 26, 74, 78) of the wiper nozzle unit (18) each protrude from the basic unit (42) on a circumferential surface of the cylindrical basic unit (42).

2. System (50) according to Claim 1, **characterized in that** the at least one coupling unit (12) has at least one coupling means (32, 34), for connection to at least one fastening element (36, 38) of the wiper arm adapter (16) of the wiper arm (14).

3. System (50) according to Claim 2, **characterized in that** the at least one second outlet opening (28) is arranged in an environment of the at least one coupling means (32).

4. System (50) according to one of the preceding claims, **characterized in that** the at least one second wiper nozzle element (26) has at least one elongate guide channel (40) which is provided to guide wiper fluid from a basic unit (42) of the wiper nozzle basic body (20) to the at least one second outlet opening (28).

5. System (50) according to Claim 4, **characterized in that** the at least one guide channel (40) is formed by a tube.

6. System (50) according to either of Claims 4 and 5, **characterized in that** the at least one guide channel (40) is at least partially composed of aluminium.

7. System (50) according to one of the preceding claims, **characterized in that** the at least one first wiper nozzle element (22) is at least partially formed by a spherical nozzle.

8. System (50) according to one of the preceding claims, **characterized in that** the at least one wiper nozzle basic body (20) has at least one valve (44) via which, during operation, the at least one first wiper nozzle element (22) and the at least one second wiper nozzle element (26) are supplied with wiper fluid.

9. System (50) according to Claim 8, **characterized in that** the at least one valve (44) of the at least one wiper nozzle basic body (20) is formed by a membrane valve.

10. System (50) according to one of the preceding claims, **characterized in that** the at least one first outlet opening (24) has an outlet vector (46) which is substantially different from an outlet vector (48) of the at least one second outlet opening (28).

## Revendications

1. Système (50) avec un bras d'essuie-glace (14), qui présente un adaptateur de bras d'essuie-glace (16), et avec un dispositif de bras d'essuie-glace (10), qui présente au moins une unité de buse d'essuie-glace (18) et au moins une unité de couplage (12) pour la liaison au bras d'essuie-glace (14) par au moins un premier moyen de couplage (32), l'unité de couplage (12) étant prévue pour une liaison du dispositif de bras d'essuie-glace (10) à l'adaptateur de bras d'essuie-glace (16) du bras d'essuie-glace (14), l'unité de buse d'essuie-glace (18) comprenant au moins un corps de base de buse d'essuieglace (20) agencé sur une plaque de base (72), au moins un premier élément de buse d'essuie-glace (22), qui présente au moins une première ouverture de sortie (24), et au moins un deuxième élément de buse d'essuie-glace (26), qui présente au moins une deuxième ouverture de sortie (28), une distance (al) entre l'au moins une première ouverture de sortie (24) et un centre de gravité (30) du corps de base de la buse d'essuie-glace (20) étant essentiellement inférieure à une distance (a2) entre l'au moins une deuxième ouverture de sortie (28) et le centre de gravité (30) du corps de base de buse d'essuie-glace (20),
**caractérisé en ce que** le corps de base de buse d'essuieglace (20) présente une unité de base (42) qui est formée par un composant cylindrique, l'unité de base (42) dépassant verticalement de la plaque de base (72) sur un côté de la plaque de base (72) détourné de la surface latérale (66) de l'adaptateur de bras d'essuie-glace (16) dans un état monté du dispositif de bras d'essuie-glace (10), le centre de gravité (30) du corps de base de buse d'essuie-glace (20) étant agencé approximativement à un centre géométrique de l'unité de base (42), les éléments de buse d'essuie-glace (22, 26, 74, 78) de l'unité de buse d'essuie-glace (18) dépassant chacun de l'unité de base (42) sur une surface d'enveloppe de l'unité de base (42) cylindrique.

2. Système (50) selon la revendication 1, **caractérisé en ce que** l'au moins une unité de couplage (12) présente au moins un moyen de couplage (32, 34) pour la liaison à au moins un élément de fixation (36, 38) de l'adaptateur de bras d'essuie-glace (16) du bras d'essuie-glace (14).

3. Système (50) selon la revendication 2, **caractérisé en ce que** l'au moins une deuxième ouverture de sortie (28) est agencée dans un environnement de l'au moins un moyen de couplage (32).

4. Système (50) selon l'une quelconque des revendications précédentes, **caractérisé en ce que** l'au moins un deuxième élément de buse d'essuie-glace (26) présente au moins un canal de guidage allongé (40) qui est prévu pour guider du liquide d'essuie-glace depuis une unité de base (42) du corps de base de buse d'essuieglace (20) vers l'au moins une deuxième ouverture de sortie (28).

5. Système (50) selon la revendication 4, **caractérisé en ce que** l'au moins un canal de guidage (40) est formé par un tube.

6. Système (50) selon l'une quelconque des revendications 4 ou 5, **caractérisé en ce que** l'au moins un canal de guidage (40) est au moins partiellement constitué d'aluminium.

7. Système (50) selon l'une quelconque des revendications précédentes, **caractérisé en ce que** l'au moins un premier élément de buse d'essuie-glace (22) est formé au moins partiellement par une buse à bille.

8. Système (50) selon l'une quelconque des revendications précédentes, **caractérisé en ce que** l'au moins un corps de base de buse d'essuie-glace (20) présente au moins une soupape (44) par l'intermédiaire de laquelle s'effectue, en fonctionnement, une alimentation en liquide d'essuie-glace de l'au moins un premier élément de buse d'essuie-glace (22) et de l'au moins un deuxième élément de buse d'essuie-glace (26).

9. Système (50) selon la revendication 8, **caractérisé en ce que** l'au moins une soupape (44) de l'au moins un corps de base de buse d'essuie-glace (20) est formée par une soupape à membrane.

10. Système (50) selon l'une quelconque des revendications précédentes, **caractérisé en ce que** l'au moins une première ouverture de sortie (24) présente un vecteur de sortie (46) qui est essentiellement différent d'un vecteur de sortie (48) de l'au moins une deuxième ouverture de sortie (28).
